# EUROPÄISCHE PATENTSCHRIFT

(11) **EP 3 456 641 B1**
(45) Veröffentlichungstag und Bekanntmachung des Hinweises auf die Patenterteilung: **11.03.2020**
(21) Anmeldenummer: 18192643.7
(22) Anmeldetag: 05.09.2018
(51) Int. Cl.: B65B 47/00, B65B 47/02, B65B 47/08, B65B 47/10, B65B 9/04

(54) **TIEFZIEHVERPACKUNGSMASCHINE UND VERFAHREN ZUM FORMEN EINER FOLIENBAHN IN KARTONELEMENTE**
DEEP DRAW PACKAGING MACHINE AND METHOD FOR FORMING A FILM WEB IN CARTON ELEMENTS
MACHINE D'EMBALLAGE PAR EMBOUTISSAGE ET PROCÉDÉ DE MOULAGE D'UNE BANDE DE FILM DANS DES ÉLÉMENTS DE CARTON

(30) Priorität: 15.09.2017 DE 102017121438
(43) Veröffentlichungstag der Anmeldung: 20.03.2019
(73) Patentinhaber: MULTIVAC Sepp Haggenmüller SE & Co. KG, 87787 Wolfertschwenden (DE)
(72) Erfinder: HAGGENMÜLLER, Martin, 87439 Kempten (DE); MÖßNANG, Konrad, 87439 Kempten (DE)
(74) Vertreter: Grünecker Patent- und Rechtsanwälte PartG mbB

(56) Entgegenhaltungen:
- EP-A1- 0 196 799
- EP-A1- 3 009 355
- EP-A1- 3 176 101
- WO-A1-2017/001114
- DE-A1-102011 120 949
- US-A- 4 257 530

## Beschreibung

Die vorliegende Erfindung betrifft eine Tiefziehverpackungsmaschine zum Formen einer Folie in ein Kartonelement gemäß Anspruch 1, sowie ein Verfahren nach Anspruch 8.

Aus der US 7,607,279 B2 ist eine Tiefziehverpackungsmaschine bekannt, bei der ein Formwerkzeugunterteil auf Führungsschienen seitlich aus dem Maschinenrahmen herausziehbar ist, um eine Wartung an einem Formwerkzeugunterteil vorzunehmen oder um dieses durch ein anderes Formwerkzeugunterteil zu ersetzen.

Die EP 1234765 A1 offenbart ebenfalls eine Tiefziehverpackungsmaschine mit einer Einrichtung zum Wechseln von Form- und Siegelwerkzeugen nicht quer sondern in bzw. gegen die Produktionsrichtung. Die US 4,257,530 beschreibt eine Vorrichtung, bei der eine Kartonschale mit einer Folie verschlossen wird. In der Verpackungsmaschine der DE 10 2011 120 949 A1 wird ein Strukturelement beispielsweise aus Papier, Pappe, Karton, Kunststoff oder Metall in einer besonderen Verbindungsstation mit Mulden in einer Folienbahn verbunden. Weitere Verfahren zum Herstellen von Verpackungen sind in der EP 0 196 799 A1 oder der EP 3 009 355 A1 beschrieben.

Aus der WO 2017001114 A1 ist eine weitere Tiefziehverpackungsmaschine bekannt, um Kartonschalen in eine Matrize mittels eines Manipulators einzulegen, um die Matrize in die Formstation einzubringen, damit in der Formstation eine Folienbahn in die Kartonschalen eingeformt werden kann. Die Matrize wird außerhalb des Maschinenrahmens mit Kartonschalen befüllt und die Matrize wird mittels zweier aufeinander folgender und unterschiedlich ausgerichteter Bewegungen der Formstation zugeführt. Diese Tiefziehverpackungsmaschine ist zur Herstellung von Verpackungen vorgesehen, die aus einer Kartonschale bestehen, die innen mit einer Folie ausgekleidet ist, um auch Lebensmittel gasdicht und lang haltbar verpacken zu können. Nachteilig an einer solchen Tiefziehverpackungsmaschine ist die Leistungsbegrenzung durch die Zeit, die zum Einlegen und Einbringen der Kartonschalen in die Formstation benötigt wird.

Aufgabe der Erfindung ist es, eine verbesserte Tiefziehverpackungsmaschine zur Herstellung von Karton-Kunststoff-Verbundverpackungen bereitzustellen.

Die Aufgabe wird gelöst durch eine Tiefziehverpackungsmaschine mit den Merkmalen des Anspruchs 1, sowie durch ein Verfahren gemäß Anspruch 8. Vorteilhafte Weiterbildungen der Erfindung sind in den Unteransprüchen angegeben.

Die erfindungsgemäße Tiefziehverpackungsmaschine umfasst eine Formstation, die wenigstens ein Formwerkzeugunterteil umfasst, wobei das Formwerkzeugunterteil quer zu einer Arbeitsrichtung der Tiefziehverpackungsmaschine bewegbar ist. Die erfindungsgemäße Tiefziehverpackungsmaschine zeichnet sich dadurch aus, dass das Formwerkzeugunterteil wenigstens eine Aufnahme mit einer oder mehreren Mulden für ein Kartonelement bzw. eine Gruppe von Kartonelementen aufweist, wobei sich zum Formen einer ersten Folienbahn in das Formwerkzeugunterteil die Aufnahme mit den Kartonelementen in einer Formstellung befindet. So kann die erste Folienbahn in die Kartonelemente eingeformt werden, ohne dass eine zusätzliche Arbeitsstation vorgesehen werden muss, um eine Karton-Kunststoff-Verbundpackung herzustellen. Das Kartonelement bringt dabei eine hohe Stabilität mit, sodass dünne Folienbahnen wie Skinfolien verwendet werden können, um auch flüssige oder pastöse Lebensmittel gasdicht zu verpacken. Dies senkt den Folienverbrauch und ermöglicht gleichzeitig eine optisch sehr ansprechende und stabile Packung.

Erfindungsgemäß weist das Formwerkzeugunterteil zwei Aufnahmen auf, so dass jeweils eine Aufnahme mit Kartonelementen befüllt werden kann, während sich die andere Aufnahme noch oder bereits im Formprozess befindet, um eine Reduzierung der Taktleistung der Tiefziehverpackungsmaschine zu verhindern. Dabei ist eine Aufnahme in eine Einlegestellung seitlich neben einem Maschinenrahmen der Tiefziehverpackungsmaschine positionierbar, während die andere Aufnahme sich in der Formstellung befindet.

Bevorzugt ist das Formwerkzeugunterteil kraftbetrieben, insbesondere mittels eines Wechselantriebs, zwischen der Einlegestellung und einer Bereitschaftsstellung bewegbar, um diesen Positionswechsel in den automatisierten Maschinenablauf zu integrieren. Aus der Bereitschaftsstellung kann das Formwerkzeugunterteil ggf. in seine Formstellung angehoben werden.

In einer besonders vorteilhaften Ausführung sind zwei Formwerkzeugunterteile vorgesehen, die gegenläufig zueinander und quer zur Arbeitsrichtung kraftbetrieben bewegbar sind. So kann eine hohe Taktleistung der Tiefziehverpackungsmaschine erreicht werden, da in jedem Arbeitstakt auf jeder Maschinenseite je ein Formwerkzeugunterteil mit neuen Kartonelementen bestückbar ist, und ein Gewichtsausgleich durch die jeweils seitlich über den Maschinenrahmen hinausstehenden Formwerkzeugunterteile für die gemeinsame Hubvorrichtung bewirkt werden.

Die beiden Formwerkzeugunterteile sind dabei bevorzugt in Transportrichtung hintereinander angeordnet, wobei sie insbesondere unmittelbar hintereinander angeordnet sein können, so dass sich in Transportrichtung gesehen ein erstes Formwerkzeugunterteil vor einem zweiten Formwerkzeugunterteil befindet. Jedes der beiden Formwerkzeugunterteile kann zwei Bereiche aufweisen, die ihrerseits jeweils eine oder mehrere Mulden zum Aufnehmen von Kartonelementen aufweisen. Die beiden Bereiche der Formwerkzeugunterteile liegen in Draufsicht quer zur Transportrichtung nebeneinander, können also als rechter und linker Bereich des jeweiligen Formwerkzeugunterteils bezeichnet werden. Zu einem ersten Zeitpunkt befindet sich der rechte Bereich des ersten Formwerkzeugunterteils in seiner Bereitschaftsstellung, während sich der linke Bereich des ersten Formwerkzeugunterteils auf der in Transportrichtung linken Seite der Verpackungsmaschine in seiner Einlegestellung befindet und dort mit Kartonelementen beladen werden kann. Zum gleichen Zeitpunkt befindet sich der linke Bereich des zweiten Formwerkzeugunterteils in seiner Bereitschaftsstellung, während sich der rechte Bereich des zweiten Formwerkzeugunterteils auf der rechten Seite der Verpackungsmaschine in seiner Einlegestellung befindet, in der er mit Kartonelementen bestückt werden kann. Auf jeder Seite der Verpackungsmaschine kann somit jeweils ein Bereich bestückt werden, nämlich der linke Bereich des ersten Formwerkzeugunterteils und der rechte Bereich des zweiten Formwerkzeugunterteils.

Durch eine gegenläufige Bewegung quer zur Transportrichtung der Tiefziehverpackungsmaschine werden die beiden Formwerkzeugunterteile anschließend so bewegt, dass die beiden vorher in der Bereitschaftsstellung befindlichen Bereiche nach außen gefahren werden, während gleichzeitig die beiden damit verbundenen, vorher in ihrer Einlegestellung befindlichen Bereiche in ihre Bereitschaftsstellung gebracht werden. Konkret wird dazu das erste Formwerkzeugunterteil nach rechts verfahren, während gleichzeitig das zweite Formwerkzeugunterteil nach links verfahren wird, jeweils in Transportrichtung betrachtet. Die sich nun in ihrer Einlegestellung befindlichen Bereiche der beiden Formwerkzeugunterteile können nun mit neuen Kartonelementen bestückt werden, bevor die beiden Formwerkzeugunterteile erneut durch eine gegenläufige Bewegung quer zur Transportrichtung wieder in ihre ursprüngliche Stellung zurückgebracht werden.

Vorzugsweise sind die Aufnahmen auf einer gemeinsamen Formplatte stationär angeordnet, um zwei annähernd identisch herstellbare Bauteile zu haben, die derart auf der Formplatte aufgebracht werden, dass zwischen beiden eine Lücke vorhanden ist, in die Teile des Maschinenrahmens bei einer vertikalen Hubbewegung nach oben kollisionsfrei eintauchen können.

In einer vorteilhaften Ausführung weist die Formstation eine Hubvorrichtung für das Formwerkzeugunterteil auf und die Hubvorrichtung erstreckt sich an wenigstens einer Seite des Maschinenrahmens hinaus, um eine ungleiche Gewichtsverteilung des Formwerkzeugunterteils besser aufnehmen zu können.

Vorzugsweise erstreckt sich dabei die Hubvorrichtung beidseitig über den Maschinenrahmen hinaus.

Vorteilhafterweise ist die Formstation dazu konfiguriert, die erste Folienbahn in die in dem Formwerkzeugunterteil befindlichen Kartonelemente derart einzuformen, dass die Folienbahn eine Verbindung mit den Kartonelementen eingeht und damit für die nachfolgenden Prozesse entlang der Tiefziehverpackungsmaschine bereits Karton-Kunststoff-Verbundbehälter bereitgestellt werden können.

Ein erfindungsgemäßes Verfahren zum Formen einer Folienbahn in Kartonelemente, die sich in dem Formwerkzeugunterteil befinden, sieht vor, dass die Kartonelemente in Mulden einer Aufnahme des Formwerkzeugunterteils in einer Einlegestellung außerhalb des Maschinenrahmens eingelegt werden, danach die Aufnahme quer zur Arbeitsrichtung in die Bereitschaftsstellung in der Formstation kraftbetrieben positioniert wird, anschließend die Hubvorrichtung das Formwerkzeugunterteil nach oben in seine Formstellung an ein Formwerkzeugoberteil anhebt und dann die Folienbahn in die Mulden der Aufnahme bzw. in die Kartonelemente formt.

Dabei wird eine Aufnahme in der Einlegestellung außerhalb des Maschinenrahmens mit Kartonelementen beladen, während sich eine andere Aufnahme in der Bereitschaftsstellung befindet, um die Taktleistung der Tiefziehverpackungsmaschine durch den Prozess des Einbringens von Kartonelementen vor dem Formprozess nicht negativ zu beeinflussen.

In einer vorteilhaften Ausführung des Verfahrens werden zwei in Arbeitsrichtung aufeinanderfolgende Formwerkzeugunterteile der Formstation, vorzugsweise gleichzeitig und entgegengesetzt zueinander, jeweils zwischen der Einlegestellung und der Bereitschaftsstellung bewegt, um eine maximale Leistung von herstellbaren Verpackungen pro Zeit zu erreichen.

In einer ersten vorteilhaften Ausführung werden Kartonschalen als Kartonelemente mittels eines Manipulators von einem Zuführband abgenommen und in die Mulden der Aufnahmen einzeln oder als Gruppe eingelegt.

In einer zweiten vorteilhaften Ausführung wird ein Kartonzuschnitt als Kartonelement in eine Mulde der Aufnahme derart eingelegt, dass beim Einlegevorgang eine Kartonschale geformt wird.

Im Folgenden werden Ausführungsbeispiele der Erfindung anhand der Figuren näher beschrieben. Dabei zeigen
- Figur 1:: eine schematische Tiefziehverpackungsmaschine in einer Seitenansicht,
- Figur 2:: eine Draufsicht der Tiefziehverpackungsmaschine im Bereich der Formstation und
- Figur 3:: eine Draufsicht in einer Variante der Tiefziehverpackungsmaschine.

Einander entsprechende Komponenten sind in den Figuren jeweils mit gleichen Bezugszeichen versehen.

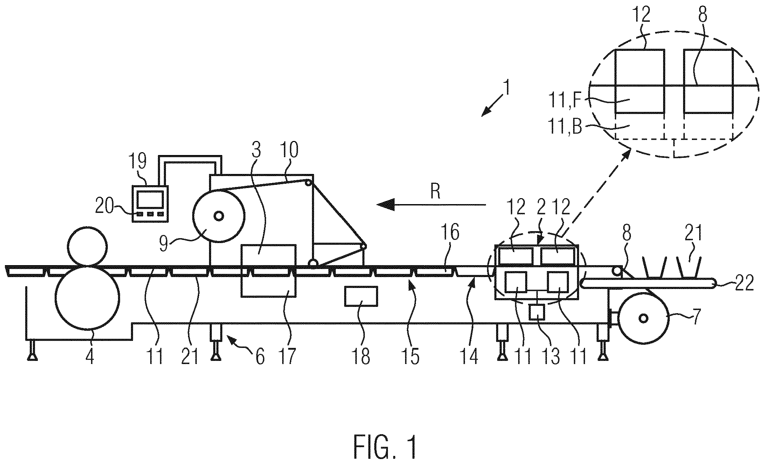

Figur 1 zeigt in schematischer Ansicht eine Tiefziehverpackungsmaschine 1. Diese Tiefziehverpackungsmaschine 1 weist eine Formstation 2, eine Siegelstation 3 und eine Schneidstation 4 auf, die in dieser Reihenfolge in einer Arbeitsrichtung R an einem Maschinengestell 6 angeordnet sind. Eingangsseitig befindet sich an einem Maschinengestell 6 eine Zufuhrrolle 7, von der eine erste Folienbahn 8 abgezogen wird. Im Bereich der Siegelstation 3 ist ein Materialspeicher 9 vorgesehen, von dem eine zweite Folienbahn 10 als Deckelfolie abgezogen wird. Ferner weist die Tiefziehverpackungsmaschine 1 eine nicht dargestellte Vorschubeinrichtung auf, die die erste Folienbahn 8 ergreift und in einem Hauptarbeitstakt taktweise in der Arbeitsrichtung R weitertransportiert. Die Vorschubeinrichtung kann zum Beispiel durch seitlich angeordnete Transportketten realisiert sein.

In der dargestellten Ausführungsform ist die Formstation 2 als eine Tiefziehstation ausgebildet, in der in die erste Folienbahn 8 durch Tiefziehen Behälter 14 geformt werden. Dabei kann die Formstation 2 derart ausgebildet sein, dass in der Richtung senkrecht zur Arbeitsrichtung R mehrere Behälter 14 nebeneinander gebildet werden. Die Maschine ist damit mehrspurig. In Arbeitsrichtung R hinter der Formstation 2 ist eine Einlegestrecke 15 vorgesehen, in der die in die erste Folienbahn 8 geformten Behälter 14 mit Produkt 16 befüllt werden.

Die Siegelstation 3 verfügt über eine verschließbare Kammer 17, in der die Atmosphäre in den Behältern 14 vor dem Versiegeln zum Beispiel durch Gasspülen mit einem Austauschgas oder mit einem Austausch-Gasgemisch ersetzt werden kann.

Die Schneidstation 4 ist dazu konfiguriert, die Folienbahnen 8, 10 zwischen den Behältern 14 zu schneiden oder zu perforieren. Dabei kann es vorgesehen sein, dass die Behälter 14 unmittelbar nach einem Schneidvorgang vereinzelt sind, d. h. dass sie nur noch individuell weitergefördert werden können. Es kann jedoch auch vorgesehen sein, dass die Behälter 14 unmittelbar nach dem Schneidvorgang noch im Verbund weitergefördert werden können.

Die Verpackungsmaschine 1 verfügt ferner über eine Steuerung 18. Sie hat die Aufgabe, die in der Verpackungsmaschine 1 ablaufenden Prozesse zu steuern und zu überwachen. Eine Anzeigevorrichtung 19 mit Bedienelementen 20 dient zum Visualisieren bzw. Beeinflussen der Prozessabläufe in der Verpackungsmaschine 1 für bzw. durch einen Bediener.

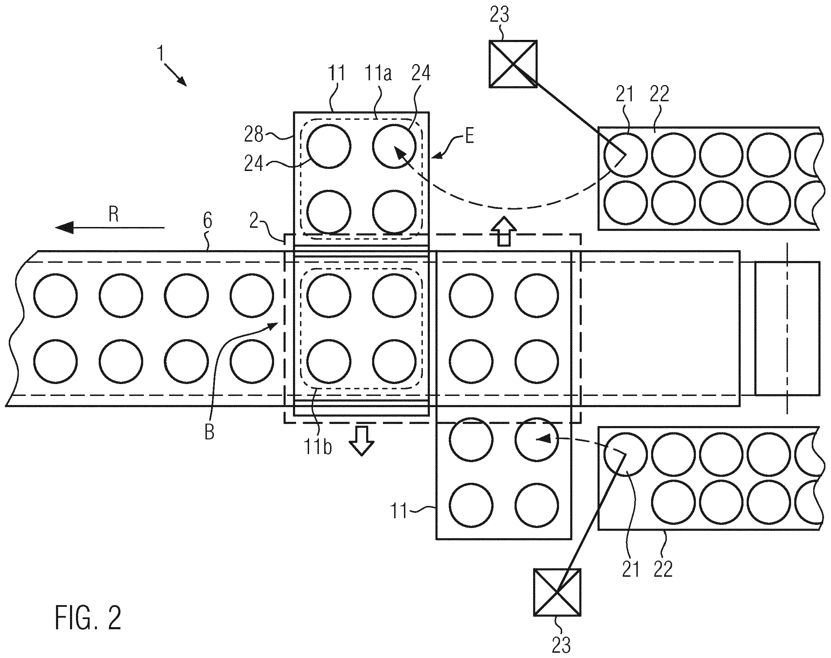

Die Formstation 2 umfasst in der dargestellten Ausführung zwei Formwerkzeugunterteile 11, die seitlich zur Arbeitsrichtung R verschiebbar sind und mit zwei Formwerkzeugoberteilen 12 jeweils für den Formprozess zusammenwirken. Die zwei Formwerkzeugoberteile 12 können auch als ein gemeinsames Formwerkzeugoberteil ausgeführt sein. Für eine vertikale Bewegung der Formwerkzeugunterteile 11 ist eine gemeinsame Hubvorrichtung 13 vorgesehen, um die Formwerkzeugunterteile 11 zwischen einer Bereitschaftsstellung B und einer Formstellung F bewegen zu können, siehe den vergrößerten Ausschnitt in Fig. 1. In der Formstellung F, auch als obere Stellung benennbar, stehen die Formwerkzeugunterteile 11 mit den Formwerkzeugoberteilen 12 derart in Kontakt, um die erste Folienbahn 8, beispielsweise eine Skinfolie, in die Formwerkzeugunterteile 11 zu formen. Die Bereitschaftsstellung ist eine untere Stellung, in der die Formwerkzeugunterteile 11 seitlich aus dem Maschinenrahmen 6 herausbewegbar sind in eine Einlegestellung E (siehe Fig. 2), um dort mit beispielsweise Kartonelementen 21 beladen zu werden. Dabei werden die Kartonelemente 21 über ein Zuführband 22 an die Formstation 2 herangeführt, um manuell oder automatisiert in die Formwerkzeugunterteile 11 eingelegt zu werden. Die erste Folienbahn 8 wird beim Formprozess in die Kartonelemente 21 eingeformt und kann im Falle einer Skinfolie mit den Innenflächen der Kartonelemente 21 eine haftende oder klebende Verbindung eingehen. Somit wird dieser Materialverbund als Behälter 14 nach dem Öffnen der Formstation 2 gemeinsam in Arbeitsrichtung R weitertransportiert.

Figur 2 zeigt eine Draufsicht der Tiefziehverpackungsmaschine 1 mit der Formstation 2, wobei die Formwerkzeugunterteile 11 jeweils orthogonal zur Arbeitsrichtung R, siehe Pfeile, bewegbar sind. Die Formwerkzeugunterteile 11 weisen jeweils zwei Aufnahmen 11a, 11b auf. Die Aufnahmen 11a, 11b sind auf einer Formplatte 28 aufgebracht oder als einteiliges Bauteil ausgeführt. In dem dargestellten Beispiel ist jede Aufnahme 11a, 11b zur Aufnahme von vier Kartonelementen 21 bzw. zur Herstellung von vier Behältern 14 vorgesehen.

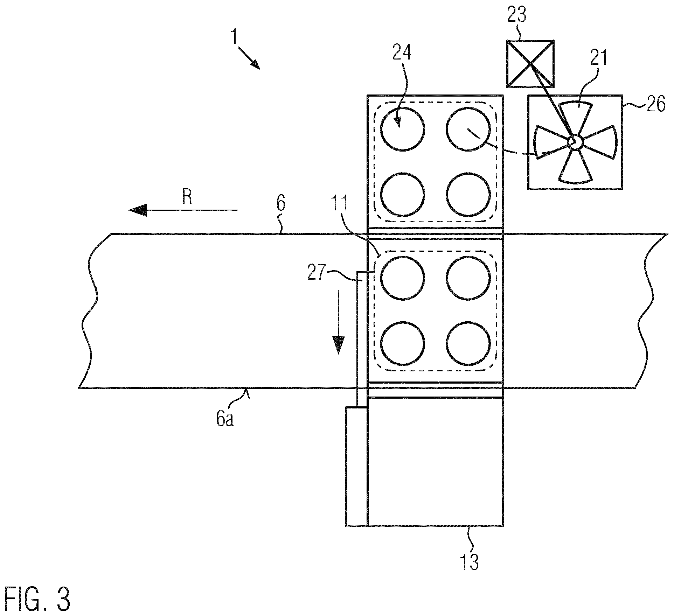

Die Kartonelemente 21 werden mittels zweier beidseitig der Tiefziehverpackungsmaschine 1 angeordneten Zuführbänder 22 herangeführt und mittels jeweils eines Manipulators 23, beispielsweise eines Skara- oder Deltaroboters, einzeln oder gruppenweise vom Zuführband 22 abgenommen und in die seitlich über eine Seite 6a des Maschinenrahmens 6 hinaus ragenden, sich in ihrer Einlegestellung E befindlichen Aufnahmen 11a, 11b bzw. in die Mulden 24 in den Formwerkzeugunterteilen 11 eingelegt. Sobald beide Formwerkzeugunterteile 11 befüllt sind und der Formprozess der Formstation 2 abgeschlossen ist, werden beide Formwerkzeugunterteile 11 jeweils in Pfeilrichtung mittels eines Wechselantriebs 27, der in Figur 3 näher dargestellt ist, gegenläufig zueinander kraftbetrieben bewegt. Nachdem die Aufnahme 11a mit den Kartonelementen 21 in der Formstation 2 ihre Bereitschaftsposition B erreicht hat, kann sie durch Anheben mittels der Hubvorrichtung 13 in ihre Formstellung F angehoben werden, um sie für den nächsten Formprozess mit dem Formwerkzeugoberteil 12 in Verbindung zu bringen.

Figur 3 zeigt eine Variante der Tiefziehverpackungsmaschine 1 mit lediglich einem Formwerkzeugunterteil 11, wobei die Hubvorrichtung 13 quer zur Arbeitsrichtung R ausgerichtet ist und einseitig oder wie hier gezeigt beidseitig über den Maschinenrahmen 6 hinaussteht. Die in Figur 3 dargestellten Kartonelemente 21 sind noch ungefaltet und werden über eine Stapelvorrichtung 26 bereitgestellt und vom Manipulator 23 in die Mulden 24 eingelegt. Das Falten der Kartonelemente 21 findet hierbei während der Eindrückbewegung des Kartonelements 21 in die Mulde 24 statt.

Details der Ausführungsvarianten der Figuren 2 und 3 sind miteinander kombinierbar.

Das Kartonelement 21 kann in ungefaltetem oder bereits in gefaltetem Zustand vorliegen.

## Patentansprüche

1. Tiefziehverpackungsmaschine (1) mit einer Formstation (2), die wenigstens ein Formwerkzeugunterteil (11) umfasst, wobei das Formwerkzeugunterteil (11) quer zu einer Arbeitsrichtung (R) der Tiefziehverpackungsmaschine (1) bewegbar ist, wobei das Formwerkzeugunterteil (11) wenigstens eine Aufnahme (11a, 11b) mit einer oder mehreren Mulden (24) zum Aufnehmen je eines Kartonelementes (21) aufweist, wobei sich zum Formen einer ersten Folienbahn (8) in das Formwerkzeugunterteil (11) die Aufnahme (11a, 11b) mit den Kartonelementen (21) in einer Formstellung befindet
und wobei das Formwerkzeugunterteil (11) zwei Aufnahmen (11a, 11b) aufweist **dadurch gekennzeichnet, dass** eine Aufnahme (11a, 11b) in eine Einlegestellung seitlich neben einem Maschinenrahmen (6) der Tiefziehverpackungsmaschine (1) positionierbar ist, während die andere Aufnahme (11a, 11b) sich in der Formstellung befindet.

2. Tiefziehverpackungsmaschine nach Anspruch 1, **dadurch gekennzeichnet, dass** das Formwerkzeugunterteil (11) mittels eines Wechselantriebs (27) zwischen der Einlegestellung (E) und einer Bereitschaftsstellung (B) bewegbar ist.

3. Tiefziehverpackungsmaschine nach einem der vorangehenden Ansprüche, **dadurch gekennzeichnet, dass** zwei Formwerkzeugunterteile (11) vorgesehen sind, die gegenläufig zueinander und quer zur Arbeitsrichtung (R) mittels eines Wechselantriebs (27) bewegbar sind.

4. Tiefziehverpackungsmaschine nach einem der vorangehenden Ansprüche , **dadurch gekennzeichnet, dass** die Aufnahmen (11a, 11b) auf einer gemeinsamen Formplatte (28) stationär angeordnet sind.

5. Tiefziehverpackungsmaschine nach einem der vorangehenden Ansprüche, **dadurch gekennzeichnet, dass** die Formstation (2) eine Hubvorrichtung (13) für das Formwerkzeugunterteil (11) aufweist und sich die Hubvorrichtung (13) über wenigstens eine Seite (6a) des Maschinenrahmens (6) hinaus erstreckt.

6. Tiefziehverpackungsmaschine nach Anspruch 5, **dadurch gekennzeichnet, dass** sich die Hubvorrichtung (13) beidseitig über den Maschinenrahmen (6) hinaus erstreckt.

7. Tiefziehverpackungsmaschine nach einem der vorangehenden Ansprüche, **dadurch gekennzeichnet, dass** die Formstation (2) dazu konfiguriert ist, die erste Folienbahn (8) in die in dem Formwerkzeugunterteil (11) befindlichen Kartonelemente (21) derart einzuformen, dass die Folienbahn (8) eine Verbindung mit den Kartonelementen (21) eingeht.

8. Verfahren zum Formen mittels einer Tiefziehverpackungsmaschine gemäß einem der Ansprüche 1 bis 7 einer Folienbahn (8) in Kartonelemente (21), die sich in dem Formwerkzeugunterteil (11) befinden, wobei die Kartonelemente (21) in Mulden (24) einer Aufnahme (11a, 11b) des Formwerkzeugunterteils (11) in einer Einlegestellung (E) außerhalb des Maschinenrahmens (6) eingelegt werden, danach die Aufnahme (11a,11b) quer zur Arbeitsrichtung (R) in die Formstellung in der Formstation (2) kraftbetrieben bewegt wird, anschließend eine Hubvorrichtung (13) das Formwerkzeugunterteil (11) nach oben an ein Formwerkzeugoberteil (12) anhebt und dann die Folienbahn (8) in die Mulden (24) der Aufnahme (11a, 11b) geformt werden,
wobei eine Aufnahme (11a, 11b) in ihrer Einlegestellung (E) außerhalb des Maschinenrahmens (6) mit Kartonelementen (21) beladen wird, während sich eine andere Aufnahme (11a, 11b) in ihrer Formstellung (F) befindet.

9. Verfahren nach Anspruch 8, **dadurch gekennzeichnet, dass** zwei in Arbeitsrichtung (R) aufeinanderfolgende Formwerkzeugunterteile (11) der Formstation (2), vorzugsweise gleichzeitig und entgegengesetzt zueinander, zwischen der Einlegestellung (E) und der Formstellung (F) bewegt werden.

10. Verfahren nach einem der Ansprüche 8 oder 9, **dadurch gekennzeichnet, dass** Kartonschalen als Kartonelemente (21) mittels eines Manipulators (23) von einem Zuführband (22) abgenommen und in die Mulden (24) der Aufnahmen (11a, 11b) einzeln oder als Gruppe eingelegt werden.

11. Verfahren nach einem der Ansprüche 8 bis 10, **dadurch gekennzeichnet, dass** ein Kartonzuschnitt als Kartonelement (21) in eine Mulde (24) der Aufnahme (11a,11b) derart eingelegt wird, dass beim Einlegevorgang eine Kartonschale geformt wird.

## Claims

1. A thermoform packaging machine (1) with a forming station (2) comprising at least one forming tool lower part (11), the forming tool lower part (11) being movable transversely to an operating direction (R) of the thermoform packaging machine (1), wherein the forming tool lower part (11) comprises at least one reception unit (11a, 11b) with one or a plurality of troughs (24) for receiving therein a respective cardboard element (21), wherein, for forming-in a first film web (8) into the forming tool lower part (11), the reception unit (11a, 11b) with the cardboard elements (21) is at a forming position, and wherein the forming tool lower part (11) comprises two reception units (11a, 11b), **characterized in that** one reception unit (11a, 11b) is positionable at an infeed position laterally beside a machine frame (6) of the thermoform packaging machine (1), while the other reception unit (11a, 11b) is at the forming position.

2. The thermoform packaging machine according to claim 1, **characterized in that** the forming tool lower part (11) is movable between the infeed position (E) and a stand-by position (B) by means of a change-over drive (27).

3. The thermoform packaging machine according to one of the preceding claims, **characterized in that** two forming tool lower parts (11) are provided, which are movable in opposite directions to one another and transversely to the operating direction (R) by means of a change-over drive (27).

4. The thermoform packaging machine according to one of the preceding claims, **characterized in that** the reception units (11a, 11b) are arranged in a stationary manner on a common die plate (28).

5. The thermoform packaging machine according to one of the preceding claims, **characterized in that** the forming station (2) comprises a lifting device (13) for the forming tool lower part (11) and that the lifting device (13) extends beyond at least one side (6a) of the machine frame (6).

6. The thermoform packaging machine according to claim 5, **characterized in that** the lifting device (13) extends beyond the machine frame (6) on both sides.

7. The thermoform packaging machine according to one of the preceding claims, **characterized in that** the forming station (2) is configured for forming-in the first film web (8) into the cardboard elements (21) located in the forming tool lower part (11), such that a connection will be established between the film web (8) and the cardboard elements (21).

8. A method of forming-in, by means of a thermoform packaging machine according to any of claims 1 to 7, a film web (8) into cardboard elements (21) located in the forming tool lower part (11), comprising the steps of feeding the cardboard elements (21) into troughs (24) of a reception unit (11a, 11b) of the forming tool lower part (11) at an infeed position (E) outside the machine frame (6), power moving the reception unit (11a, 11b) then transversely to the operating direction (R) to the forming position in the forming station (2), moving the forming tool lower part (11) then upwards by means of a lifting device (13) into contact with a forming tool upper part (12) and, subsequently, forming-in the film web (8) into the troughs (24) of the reception unit (11a, 11b), wherein a reception unit (11a, 11b) is charged with cardboard elements (21) at its infeed position (E) outside the machine frame (6) while another reception unit (11a, 11b) is at its forming position (F).

9. The method according to claim 8, **characterized in that** two forming tool lower parts (11) of the forming station (2), which are arranged in succession in the operating direction (R), are moved between the infeed position (E) and the forming position (F), preferably simultaneously and in opposite directions to one another.

10. The method according to one of the claims 8 or 9, **characterized in that** cardboard trays are removed by means of a manipulator (23) from a feed belt (22) as cardboard elements (21) and fed into the troughs (24) of the reception units (11a, 11b) individually or in groups.

11. The method according to one of the claims 8 to 10, **characterized in that** a cardboard blank is fed into a trough (24) of the reception unit (11a, 11b) as a cardboard element (21) in such a way that a cardboard tray will be formed during the infeed process.

## Revendications

1. Machine d'emballage par emboutissage (1) avec un poste de formage (2) comprenant au moins une partie inférieure d'outil de formage (11), la partie inférieure d'outil de formage (11) étant déplaçable transversalement à une direction de travail (R) de la machine d'emballage par emboutissage (1), la partie inférieure d'outil de formage (11) présentant au moins un réceptacle (11a, 11b) avec un ou plusieurs creux (24) pour recevoir chacun un élément de carton (21), où, pour former une première bande de film (8) dans la partie inférieure d'outil de formage (11), le réceptacle (11a, 11b) avec les éléments de carton (21) se trouve dans une position de formage et où la partie inférieure d'outil de formage (11) présente deux réceptacles (11a, 11b), **caractérisé en ce qu'**un réceptacle (11a, 11b) peut être positionné dans une position d'insertion latéralement à côté d'un bâti de machine (6) de la machine d'emballage par emboutissage (1), tandis que l'autre réceptacle (11a, 11b) se trouve dans la position de formage.

2. Machine d'emballage par emboutissage selon la revendication 1, **caractérisée en ce que** la partie inférieure d'outil de formage (11) est déplaçable entre la position d'insertion (E) et une position d'attente (B) au moyen d'un entraînement alternatif (27).

3. Machine d'emballage par emboutissage selon l'une des revendications précédentes, **caractérisée en ce que** sont prévues deux parties inférieures d'outil de formage (11) qui sont déplaçables dans des directions opposées l'une à l'autre et transversalement à la direction de travail (R) au moyen d'un entraînement alternatif (27).

4. Machine d'emballage par emboutissage selon l'une des revendications précédentes, **caractérisée en ce que** les réceptacles (11a, 11b) sont disposés de manière stationnaire sur une plaque de formage commune (28).

5. Machine d'emballage par emboutissage selon l'une des revendications précédentes, **caractérisée en ce que** le poste de formage (2) comprend un dispositif de levage (13) pour la partie inférieure d'outil de formage (11) et le dispositif de levage (13) s'étend au-delà d'au moins un côté (6a) du bâti (6) de la machine.

6. Machine d'emballage par emboutissage selon la revendication 5, **caractérisée en ce que** le dispositif de levage (13) s'étend des deux côtés au-delà du bâti (6) de la machine.

7. Machine d'emballage par emboutissage selon l'une des revendications précédentes, **caractérisée en ce que** le poste de formage (2) est configuré pour former la première bande de film (8) dans les éléments de carton (21) situés dans la partie inférieure d'outil de formage (11) de telle manière que la bande de film (8) se lie avec les éléments de carton (21).

8. Procédé pour former, au moyen d'une machine d'emballage par emboutissage selon l'une des revendications 1 à 7, une bande de film (8) dans des éléments de carton (21) qui se trouvent dans la partie inférieure d'outil de formage (11), où les éléments de carton (21) sont insérés dans des creux (24) d'un réceptacle (11a, 11b) de la partie inférieure d'outil de formage (11) dans une position d'insertion (E) à l'extérieur du bâti de machine (6), puis le réceptacle (11a, 11b) est déplacé par un entraînement transversalement à la direction de travail (R) vers la position de formage dans le poste de formage (2), puis un dispositif de levage (13) soulève la partie inférieure d'outil de formage (11) vers le haut jusqu'à une partie supérieure d'outil de formage (12) et ensuite la bande de film (8) est formée dans les creux (24) du réceptacle (11a, 11b),
où un réceptacle (11a, 11b) est chargé d'éléments de carton (21) dans sa position d'insertion (E) à l'extérieur du bâti de machine (6), pendant qu'un autre réceptacle (11a, 11b) se trouve dans sa position de formage (F).

9. Procédé selon la revendication 8, **caractérisé en ce que** deux parties inférieures d'outil de formage (11) du poste de formage (2), qui se succèdent dans la direction de travail (R), sont insérées de préférence simultanément et dans des directions opposées l'une à l'autre entre la position d'insertion (E) et la position de formage (F).

10. Procédé selon l'une des revendications 8 ou 9, **caractérisé en ce que** des coupes de carton sont prélevées comme éléments de carton (21) d'une bande de convoyage (22) au moyen d'un manipulateur (23) et insérés dans les creux (24) des réceptacles (11a, 11b) individuellement ou en groupe.

11. Procédé selon l'une des revendications 8 à 10, **caractérisé en ce qu'**un flan de carton est inséré comme élément de carton (21) dans un creux (24) du réceptacle (11a, 11b) de telle sorte qu'une coupe de carton est formée pendant le processus d'insertion.
